# EUROPEAN PATENT APPLICATION

(11) **EP 4 586 108 A1**
(43) Date of publication of application: **16.07.2025**
(21) Application number: 25151374.3
(22) Date of filing: 10.01.2025
(51) Int. Cl.: G06F 16/901

(54) **A METHOD OF QUERYING GRAPH DATA FOR GRAPH DATABASES AND ASSOCIATED EQUIPMENT**

(30) Priority: 11.01.2024 CN 202410048968
(71) Applicant: Alipay (Hangzhou) Information Technology Co., Ltd., Hangzhou, Zhejiang 310000 (CN)
(72) Inventor: TAO, Wu, Zhejiang, 310000 (CN)
(74) Representative: Fish & Richardson P.C.

(57) **Abstract**

This specification provides graph data query methods for a graph database and related devices. The graph database includes a query engine and a storage engine, and the method includes: parsing, in response to a query request for the graph database, a query statement included in the query request, to obtain at least one query condition included in the query statement; determining whether the at least one query condition includes a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and if the at least one query condition includes the query condition, pushing down, to the storage engine, the query condition that needs to be executed by the operator, so that the storage engine executes the query request.

## Description

### TECHNICAL FIELD

One or more embodiments of this specification relate to the field of graph data technologies, and in particular, to graph data query methods for a graph database and related devices.

### BACKGROUND

A graph is an important data structure that is widely used in data storage in a plurality of fields including the financial field and the business field. Graph data usually includes nodes (or vertices) and edges connecting nodes, where the nodes represent entities, and the edges can represent a relationship between nodes.

A graph database is a non-relational database whose main function is to store and manage graph data and provide a query service to the outside. A query technology for the graph database is one of the most basic and commonly used functions of graph databases. Query efficiency for the graph database directly affects user experience of upper-layer applications. Therefore, how to improve the query efficiency for the graph database is an urgent problem to be solved.

### SUMMARY

In view of this, one or more embodiments of this specification provide graph data query methods for a graph database and related devices.

According to a first aspect, this specification provides a graph data query method for a graph database, where the graph database includes a query engine and a storage engine, and the method includes: parsing, in response to a query request for the graph database, a query statement included in the query request, to obtain at least one query condition included in the query statement; determining whether the at least one query condition includes a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and if the at least one query condition includes the query condition, pushing down, to the storage engine, the query condition that needs to be executed by the operator, so that the storage engine executes the query request.

According to a second aspect, this specification provides a graph data query apparatus for a graph database, where the graph database includes a query engine and a storage engine, and the apparatus includes: an acquisition unit, configured to parse, in response to a query request for the graph database, a query statement included in the query request, to obtain at least one query condition included in the query statement; a determining unit, configured to determine whether the at least one query condition includes a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and a calculation pushdown unit, configured to, if the at least one query condition includes the query condition, push down, to the storage engine, the query condition that needs to be executed by the operator, so that the storage engine executes the query request.

According to a third aspect, this specification provides a graph database, where the graph database includes a query engine and a storage engine, where the query engine is configured to: parse, in response to a query request for the graph database, a query statement included in the query request, to obtain at least one query condition included in the query statement; determine whether the at least one query condition includes a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and if the at least one query condition includes the query condition, push down, to the storage engine, the query condition that needs to be executed by the operator; and the storage engine is configured to execute a query based on the query condition.

Correspondingly, this specification further provides a computer device, including a storage and a processor, where the storage stores a computer program executable by the processor; and when running the computer program, the processor implements the steps of the graph data query method for a graph database according to the first aspect.

Correspondingly, this specification further provides a computer-readable storage medium, storing a computer program. When the computer program is executed by a processor, the graph data query method for a graph database according to the first aspect is performed.

In conclusion, in response to the query request for the graph database, the query engine of the graph database can first parse the query statement included in the query request to obtain the at least one query condition included in the query statement. The query engine can then determine whether the at least one query condition includes a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results. If the at least one query condition includes the query condition, the query engine can push down, to the storage engine, the query condition that needs to be executed by the operator, so that the storage engine executes the query request. As such, in this application, the query condition is pushed down to the storage engine, and the storage engine replaces the query engine to execute the query. Therefore, the graph data that satisfies the query condition can be directly read from the stored graph data, and returned to a user as a query result, thereby effectively reducing reading of a large amount of irrelevant data and a plurality of transmissions of a large amount of data between the storage engine and the query engine, greatly reducing an amount of data read and transmitted in each graph data query, and further improving query efficiency and ensuring user experience.

### BRIEF DESCRIPTION OF DRAWINGS

FIG. 1 is a schematic diagram illustrating a system structure of a graph data query system for a graph database, according to some example embodiments;
FIG. 2 is a schematic flowchart illustrating a graph data query method for a graph database, according to some example embodiments;
FIG. 3 is a schematic diagram illustrating an encoding method for graph data, according to some example embodiments;
FIG. 4 is a schematic diagram illustrating a storage method for graph data, according to some example embodiments;
FIG. 5 is a schematic diagram illustrating a structure of a graph data query apparatus for a graph database, according to some example embodiments; and
FIG. 6 is a schematic diagram illustrating a structure of a computer device, according to some example embodiments.

### DESCRIPTION OF EMBODIMENTS

Some example embodiments are described in detail here, and examples of the example embodiments are presented in the accompanying drawings. When the following descriptions relate to the accompanying drawings, unless specified otherwise, the same numbers in different accompanying drawings represent the same or similar elements. Implementations described in the following example embodiments do not represent all implementations consistent with one or more embodiments of this specification. On the contrary, the implementations are merely examples of apparatuses and methods that are described in the appended claims in detail and consistent with some aspects of one or more embodiments of this specification.

It is worthwhile to note that the steps of the corresponding method are not necessarily performed in the sequence shown and described in this specification in other embodiments. In some other embodiments, the method can include more or fewer steps than those described in this specification. In addition, a single step described in this specification may be split into a plurality of steps in other embodiments for description; and a plurality of steps described in this specification may be combined into a single step in other embodiments for description.

It is worthwhile to note that "a plurality of" mentioned in this application means two or more.

First, some terms in this specification are explained and described, to facilitate understanding by a person skilled in the art.
(1) A graph database is a non-relational database whose main function is to store and manage graph data and provide a graph data query service to the outside. A graph database can usually include a query layer and a storage layer in terms of architecture, where the query layer can include a query engine, configured to process a graph data query, and the storage layer can include a storage engine, configured to perform graph data storage.

As described above, a query technology for the graph database is one of the most basic and commonly used functions of graph databases. Query efficiency for the graph database directly affects user experience of upper-layer applications. However, in a conventional graph data query technology, after the graph database receives a query request of a user, the storage engine often first reads all graph data stored on a disk and transmits the graph data to the query layer. Specifically, the graph data can be transmitted to a memory corresponding to the query engine. The query engine then searches, based on query needs of the user, all the graph data for graph data that satisfies the needs of the user, and returns the graph data to the user as a query result. Consequently, each graph data query needs traversal of all the graph data, resulting in reading of a large amount of data and a plurality of transmissions of a large amount of data between the storage layer and the query layer. It consumes a lot of time and resources, seriously reduces query efficiency, and affects user experience.

Based on this, this specification provides a technical solution. In this solution, query tasks can be pushed from the query layer of the graph database down to the storage layer, the storage engine in the storage layer directly executes a query, and graph data that satisfies a query condition is read from the stored graph data, so that an amount of data read and transmitted can be greatly reduced, and query efficiency can be improved.

In implementation, in response to the query request for the graph database, the query engine of the graph database can first parse a query statement included in the query request to obtain at least one query condition included in the query statement. The query engine can then determine whether the at least one query condition includes a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results. If the at least one query condition includes the query condition, the query engine can push down, to the storage engine, the query condition that needs to be executed by the operator, so that the storage engine executes the query request.

In the above-mentioned technical solution, in this application, the query condition is pushed down to the storage engine, and the storage engine replaces the query engine to execute the query. Therefore, the graph data that satisfies the query condition can be directly read from the stored graph data, and returned to a user as a query result, thereby effectively reducing reading of a large amount of irrelevant data and a plurality of transmissions of a large amount of data between the storage engine and the query engine, greatly reducing an amount of data read and transmitted in each graph data query, and further improving query efficiency and ensuring user experience.

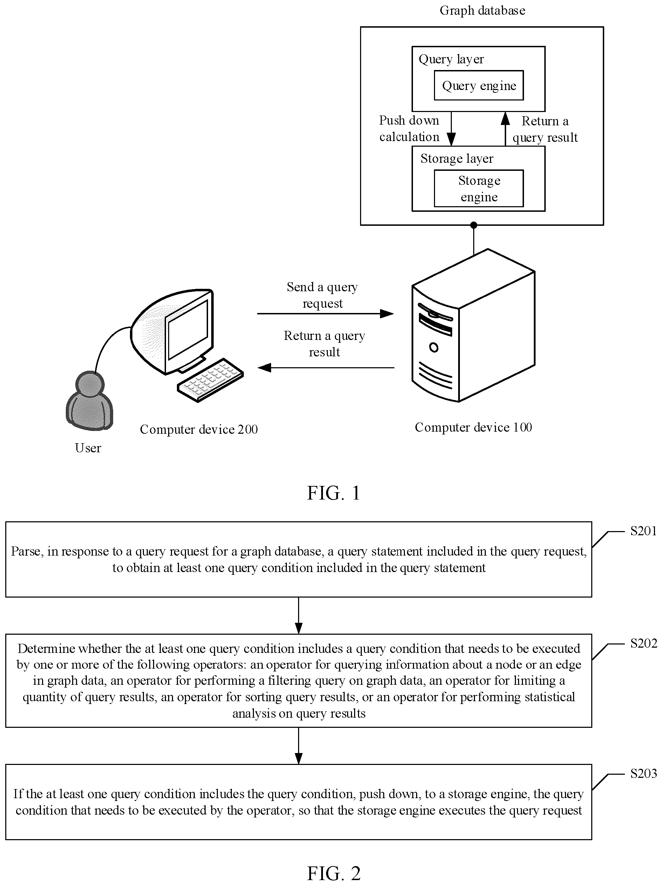

FIG. 1 is a schematic diagram illustrating a system architecture of a graph data query system for a graph database, according to some example embodiments. As shown in FIG. 1, the system architecture can include a computer device 100 and a computer device 200. The computer device 100 and the computer device 200 can communicate with each other in any possible method. For example, the computer device 100 and the computer device 200 can communicate via wireless communication methods such as Bluetooth, Wi-Fi, or a mobile network, or via wired communication methods such as data cables, etc. Implementations are not specifically limited in this specification.

As shown in FIG. 1, the computer device 100 can be used as a server-end device for graph data query, and is equipped with a graph database or connected to a graph database to provide users with graph data query services for a graph database. In some illustrated implementations, the graph database can include a query layer and a storage layer. The query layer can include a query engine, configured to process a graph data query, and the storage layer can include a storage engine, configured to perform graph data storage. It should be understood that graph data can be stored in a storage device such as a disk. Implementations are not specifically limited in this specification.

As shown in FIG. 1, the computer device 200 can be used as a client device for graph data query, and a corresponding graph data query client can run in the computer device. The client can provide users with various functions that are based on graph data queries, such as initiating graph data query requests, viewing graph data query results, comparing and analyzing historical query results, etc. Implementations are not specifically limited in this specification.

In some illustrated implementations, the graph database can further include an interface layer (not shown in FIG. 1), the interface layer can include a user interface. The user interface can be configured to receive graph data query requests sent by the user through the graph data query client, and return final query results to the graph data query client for the user to view. Implementations are not specifically limited in this specification.

Graph data usually includes nodes (or vertices) and edges connecting nodes, where the nodes represent entities, and the edges represent a relationship between nodes. Each node and each edge can have a plurality of attributes. For example, using a transaction between a merchant and a customer as an example, the graph data can include transaction information between the merchant and the customer, nodes in the graph data can be the merchant and the customer, and edges can be transaction records between the merchant and the customer. For example, in the graph data in the graph database "On December 1, 2023, customer A purchased product C from merchant B. The unit price of product C was 100 yuan, the purchase quantity was 2, and the total price paid was 200 yuan", customer A and merchant B are nodes of the graph data, and this transaction record is an edge of the graph data. It should be understood that edges usually have directionality. For example, if customer A pays 200 yuan to merchant B, the direction of the edge is from customer A to merchant B. It can also be understood that the edge is an outgoing edge with customer A as a node and an incoming edge with merchant B as a node. The above-mentioned payment time that is December 1, 2023, product name C, unit price of product C that is 100 yuan, total price paid that is 200 yuan, etc. each can be attribute information of the edge. The account name, grade, credit score, etc. of customer A each can be attribute information of the node of customer A, the merchant name, grade, applause rate, etc. of merchant B each can be attribute information of the node of merchant B, and so on. Implementations are not specifically limited in this specification.

In some illustrated implementations, as shown in FIG. 1, the user can initiate, based on current query needs of the user, graph data query requests for a graph database through the graph data query client running in the computer device 200. For example, the graph data query request can specifically be "query the transaction records in which the total transaction price of selling product C by merchant B exceeded 500 yuan from 2022 to 2023".

Correspondingly, the user interface in the graph database can receive a graph data query request initiated by the user, and send the graph data query request to the query engine in the graph database. Then, in response to the graph data query request, the query engine can first parse a query statement included in the query request to obtain at least one query condition included in the query statement. Then, the query engine can determine whether at least one query condition includes a query condition that needs to be executed by one or more predefined operators. If the at least one query condition includes the query condition, the query engine can push down the query condition that needs to be executed by the operator to the storage engine. Correspondingly, the storage engine can execute a query based on the pushed-down query condition to query target graph data that satisfies the query condition in all graph data, read the target graph data from the disk, and further return the target graph data to the query engine.

In some illustrated implementations, the above-mentioned predefined one or more operators can include one or more of the following operators: an operator for querying information about a node or an edge in graph data, for example, a project operator, an operator for performing a filtering query on graph data, for example, a filter operator, an operator for limiting a quantity of query results, for example, a limit operator, an operator for sorting query results, for example, an orderby operator, or an operator for performing statistical analysis on query results, for example, an agg operator.

Further, the query engine can return, to the graph data query client through the user interface, the target graph data obtained through query by the storage engine as a query result of the graph data query request, for the user to view.

As such, in this application, calculation of query tasks is pushed down, and the storage engine close to the data source executes the query tasks, so that the storage engine only needs to read graph data that satisfies a query condition of the user from all graph data and transmit the graph data to the query engine, to effectively reduce unnecessary data transmission between the query engine and the storage engine, thereby reducing a network bandwidth and time occupied by data transmission in each graph data query, and further effectively reducing a query latency and improving query efficiency and query performance for the graph database. The query latency can represent a total duration from the client initiating a graph data query request to receiving a query result. The total duration is usually in a unit of second or millisecond. A lower value of the query latency indicates better query performance.

In some illustrated implementations, the computer device 100 can be a desktop computer, a server, a server cluster including a plurality of servers, etc. that has the above-mentioned functions. Implementations are not specifically limited in this specification.

In some illustrated implementations, the computer device 200 can be a smart wearable device, a smart phone, a tablet computer, a laptop computer, a desktop computer, etc. that has the above-mentioned functions. Implementations are not specifically limited in this specification.

It should be understood that the system architecture shown in FIG. 1 is merely an example for description. In some possible implementations, the graph data query system can further include more or fewer devices than those shown in FIG. 1. Implementations are not specifically limited in this specification.

FIG. 2 is a schematic flowchart illustrating a graph data query method for a graph database, according to some example embodiments. The method can be applied to the system architecture shown in FIG. 1, and can specifically be applied to the computer device 100 shown in FIG. 1. As shown in FIG. 2, the method can specifically include steps S201 to S203:

Step S201: Parse, in response to a query request for the graph database, a query statement included in the query request, to obtain at least one query condition included in the query statement.

In some illustrated implementations, in response to a query request initiated by a user for the graph database, the query engine in the graph database can parse a query statement included in the query request, to obtain at least one query condition included in the query statement.

It is worthwhile to note that this application does not specifically limit the specific content of the query condition.

In some illustrated implementations, the at least one query condition can include a query condition for indicating to query information about a node or an edge in graph data, such as querying end point information of the edge and attribute information of the edge. Implementations are not specifically limited in this specification.

In some illustrated implementations, the at least one query condition can include filtering conditions for indicating to perform a filtering query on graph data, such as "2022 to 2023", "total transaction price exceeding 200 yuan", and "student scores greater than 80". Implementations are not specifically limited in this specification.

In some illustrated implementations, the at least one query condition can further include a condition for indicating to limit a quantity of query results, such as limiting a quantity of edges returned by the query to a maximum of 100. Implementations are not specifically limited in this specification. For example, the query result can be a result of performing a filtering query on the graph data based on the above-mentioned filtering condition.

In some illustrated implementations, the at least one query condition can further include a sorting condition for indicating to sort query results, such as sorting edges in descending or ascending order of transaction amounts recorded in the edges, or sorting edges in descending or ascending order of time information recorded in the edges. Implementations are not specifically limited in this specification. For example, the query result can be a result of performing a query on the graph data based on the above-mentioned sorting condition.

In some illustrated implementations, the at least one query condition can further include a statistical condition for indicating to perform statistical analysis on query results, such as statistics on transaction amounts recorded in all queried edges. Implementations are not specifically limited in this specification. The query result can be a result of performing a query on the graph data based on the above-mentioned statistical condition.

Step S202: Determine whether the at least one query condition includes a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results.

Further, after obtaining, through parsing, at least one query condition included in the query statement, the query engine can first determine whether the at least one query condition includes a query condition that needs to be executed by one or more predefined operators.

In some illustrated implementations, the above-mentioned predefined one or more operators can include one or more of the following operators: an operator for querying information about a node or an edge in graph data, for example, a project operator, where correspondingly, the above-mentioned query condition for indicating to query information about a node or an edge in graph data that is included in the at least one query condition usually needs to be executed by the project operator; an operator for performing a filtering query on graph data, for example, a filter operator, where correspondingly, the above-mentioned filtering conditions for indicating to perform a filtering query on graph data that are included in the at least one query condition usually need to be executed by the filter operator; an operator for limiting a quantity of query results, for example, a limit operator, where correspondingly, the above-mentioned condition for indicating to limit a quantity of query results that is included in the at least one query condition usually needs to be executed by the limit operator; an operator for sorting query results, for example, an orderby operator, where correspondingly, the above-mentioned sorting condition for indicating to sort query results that is included in the at least one query condition usually needs to be executed by the orderby operator; or an operator for performing statistical analysis on query results, for example, an agg operator, where correspondingly, the above-mentioned statistical condition for indicating to perform statistical analysis on query results that is included in the at least one query condition usually needs to be executed by the agg operator.

Step S203: If the at least one query condition includes the query condition, push down, to the storage engine, the query condition that needs to be executed by the operator, so that the storage engine executes the query request.

Further, after determining that the at least one query condition of the query statement includes a query condition that needs to be executed by the above-mentioned corresponding operator, the query engine can push down, to the storage engine, the query condition that needs to be executed by the operator, so that the storage engine can execute the corresponding graph data query based on the pushed-down query condition.

In some illustrated implementations, the storage engine executing the corresponding graph data query based on the pushed-down query condition can specifically include: passing the pushed-down query condition as a parameter to a corresponding operator, and executing the operator, so as to implement the graph data query.

It is worthwhile to note that this application does not specifically limit the specific implementation of the query engine pushing down the query condition to the storage engine.

In some illustrated implementations, the query engine can serialize the query condition and transmit the query condition to the storage engine. Specifically, the query engine can serialize the above-mentioned query condition and transmit the serialized query condition to the storage engine through a predetermined communication protocol. Correspondingly, the storage engine can deserialize the serialized query condition and execute the query based on a result of the deserialization. It should be understood that the result of the deserialization is the content included in the above-mentioned query condition.

In some illustrated implementations, the predetermined communication protocol can include a remote procedure call (RPC) protocol, or any other possible communication protocols. Implementations are not specifically limited in this specification.

In some illustrated implementations, the query engine can also expose the above-mentioned query condition to the storage engine through an interface. Specifically, the query engine can encode the query condition and expose the encoded query condition to the storage engine through an interface. Correspondingly, the storage engine can parse the encoded query condition and execute the query based on a result of the parsing. It should be understood that the result of the parsing is the content included in the above-mentioned query condition.

In some illustrated implementations, the user can also directly develop interfaces corresponding to related query conditions based on query needs of the user by calling open programming interfaces of the graph database. Correspondingly, the query engine can directly obtain the interfaces corresponding to the related query conditions and developed by the user through the programming interfaces, and expose the query conditions to the storage engine through the interfaces. Implementations are not specifically limited in this specification.

Still using the query conditions that need to be executed by the above-mentioned operators as an example, the corresponding interfaces can be as follows:

```
          public interface IStatePushDown<K, T, R> {
               IFilter getFilter( );
               IEdgeLimit getEdgeLimit( );
               EdgeAtom getOrderField( );
               IProjector<T, R> getProjector( );
          }
          
```

For example, the interfaces corresponding to the query conditions can specifically be as follows:
(1)

```
/** corresponding interface of project */
          public interface IProjector<T, R> extends Serializable
               R project(T value);
              ProjectType projectType( )
          }
          
```

Here, project can be used to return specific information of nodes and edges, and IProjector<T, R> can represent input of information of type T and return of information of type R, such as converting the amounts involved in the information of all edges from US dollars to RMB. Implementations are not specifically limited in this specification.

(2)

```
          /** corresponding interface of filter */
          public interface IFilter<T> extends Serializable {
               boolean filter(T value);
               DataType dateType( );
              FilterType getFilterType( );
               IFilter and(IFilter filter);
               IFilter or(IFilter filter);
          }
```

Here, dateType() can be used to indicate whether to filter nodes or edges in graph data; FilterType() can be used to indicate which attribute to filter, such as filtering time information or transaction amounts; IFilter and(IFilter filter) is used to indicate an and filtering condition, such as "the transaction product is product C, and the transaction amount is greater than 600 yuan"; and Filter or(IFilter filter) can be used to indicate an or filtering condition, such as "the transaction product is product C or product D".

In some illustrated implementations, commonly used operators in filter can include: in, equal, range, isnull, isnotnull, etc. In addition to the above-mentioned "and" and "or", the logical relationships supported by filter can further include "not", etc. Implementations are not specifically limited in this specification.

Further, in some illustrated implementations, after corresponding graph data are obtained through filtering based on filtering conditions, the agg( ) function can further be executed to perform statistical analysis on the graph data obtained through the filtering query. For example, still using graph data including transaction records between a customer and a merchant as an example, the filtering condition can be "from 2022 to 2023, the transaction product is product C, and the transaction amount is greater than 600 yuan". The agg() function can be executed to collect statistics on the total quantity of transaction records obtained through filtering, and also collect statistics on the total transaction amount involved in all transaction records. Implementations are not specifically limited in this specification.

(3)

```
          /** corresponding interface of limit */
          public interface IEdgeLimit extends Serializable {
              long inMaxVersion( );
              long outMaxVersion( );
          }
```

Here, long inMaxVersion( ) can be used to indicate a maximum quantity of incoming edges, and long outMaxVersion( ) can be used to indicate a maximum quantity of outgoing edges. For example, long inMaxVersion(100) can indicate that this query returns at most 100 incoming edges. For example, long outMaxVersion(200) can indicate that this query returns at most 200 outgoing edges.

(4)

```
/** corresponding interface of orderby */
          public interface IEdgeOrder extends Serializable {
               GraphFiledName getField( );
               boolean desc( );
          }
```

Here, GraphFiledName getField( ) can indicate sorting based on a specified attribute (or field), for example, sorting based on time information, or sorting based on a transaction amount. Implementations are not specifically limited in this specification. Here, boolean desc( ) represents descending order, correspondingly, boolean desc(false) can represent ascending order, and so on. Implementations are not specifically limited in this specification.

As such, in this application, the pushdown of calculation through an interface is implemented by exposing the query condition of the user to the storage engine through an interface. Especially when the query condition is complex, there may be more logical expressions of filtering conditions or sorting conditions. The semantic meaning of the query condition can be more easily conveyed to the storage engine through the interface, so that the storage engine can execute a query based on the query condition more accurately and efficiently, thereby improving query efficiency.

In some illustrated implementations, when executing the query based on the pushed-down query condition, the storage engine can specifically execute a graph data query through an index created in advance.

It is worthwhile to note that this application does not specifically limit the specific implementation of the index.

In some illustrated implementations, encoding information corresponding to each node and edge in the graph data can be maintained in the storage engine. The encoding information can include a plurality of fields arranged in a predetermined encoding order, and the plurality of fields can be used to sequentially describe a plurality of pieces of attribute information of the node or edge. In some illustrated implementations, the encoding information can be used as an index for a graph data query and can be stored in a memory of the storage engine.

In some illustrated implementations, the plurality of pieces of attribute information can include at least a combination of any one or more of the following attribute information: information indicating a node, information indicating an incoming edge, a timestamp, a label, or time information. Implementations are not specifically limited in this specification. For example, the graph data is a transaction record. The above-mentioned label can be electronic products, furniture, clothing, etc. Implementations are not specifically limited in this specification.

It is worthwhile to note that this application does not specifically limit the above-mentioned encoding order. In some illustrated implementations, the plurality of fields arranged in the predetermined encoding order can sequentially include: a field for describing a timestamp; a field for describing a node; a field for describing an incoming edge; a field for describing a label; a field for describing time information, etc. Implementations are not specifically limited in this specification.

In some illustrated implementations, the query condition can specifically include a filtering condition related to a plurality of pieces of attribute information of a node and/or an edge, such as "incoming edge, and the time range is 2022 to 2023". Correspondingly, the storage engine executing the query can specifically include: determining, based on the maintained encoding information corresponding to each node and edge, a target node and/or a target edge (that is, target graph data)that satisfies the filtering condition related to the plurality of pieces of attribute information among all nodes and edges, and reading the target node and/or the target edge from the storage device (for example, a disk) that stores the graph data.

As such, in this application, the encoding information corresponding to each node and edge is created in advance, and the encoding information is used as an index, so that the storage engine can quickly filter the graph data based on field content of each field in the encoding information when executing a graph data query, thereby improving the query efficiency of the storage engine.

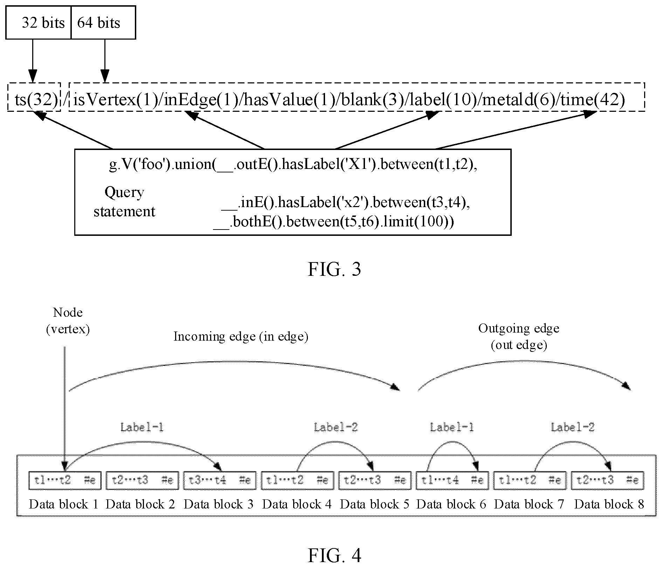

For example, references can be made to FIG. 3. FIG. 3 is a schematic diagram illustrating an encoding method for graph data, according to some example embodiments.

As shown in FIG. 3, in this application, each piece of attribute information of a node or an edge of graph data can be encoded into a plurality of fields having a total length of 96 bits. The plurality of fields can sequentially include the following fields:
ts(32): a field used for describing a timestamp of a node or an edge. The length of this field can be 32 bits. It should be understood that a timestamp is usually a string that indicates that a piece of data existed before a specific time and is complete and verifiable. A timestamp can uniquely identify a specific moment in time.
isVertex(1): a field used for describing a node. The length of this field can be 1 bit. For example, the field content of this field is 1 to indicate a node, and the field content of this field is 0 to indicate an edge. Alternatively, the field content of this field is 0 to indicate a node, and the field content of this field is 1 to indicate an edge. Implementations are not specifically limited in this specification.
inEdge(1): a field used for describing an incoming edge. The length of this field can be 1 bit. For example, the field content of this field is 1 to indicate an incoming edge, and the field content of this field is 0 to indicate an outgoing edge. Alternatively, the field content of this field is 0 to indicate an incoming edge, and the field content of this field is 1 to indicate an outgoing edge. Implementations are not specifically limited in this specification.
hasValue(1): a field used for describing whether a node or an edge includes other attributes. The length of this field can be 1 bit. For example, the field content of this field is 1 to indicate that other attributes are further included (using the node being customer A mentioned above as an example, the other attributes can be the grade, credit score, etc. of customer A), and the field content of this field is 0 to indicate that no other attributes are included. Alternatively, the field content of this field is 0 to indicate that other attributes are further included, and the field content of this field is 1 to indicate that no other attributes are included. Implementations are not specifically limited in this specification.
blank(3): a blank field used for subsequent extension. The length of this field can be 3 bits, and the field content of this field can be blank. Corresponding content can be added later based on actual conditions.
label (10): a field used for describing a label of a node or an edge. The length of this field can be 10 bits. The field content of this field can be a string obtained by converting the specific content of the label (such as the above-mentioned electronic products and furniture) into binary using a dictionary conversion method.
matald (6): a custom field. The length of this field can be 6 bits.
time (42): a field used for describing time information of a node or an edge. The length of this field can be 42 bits. For example, the time information can be transaction time between a customer and a merchant, such as "2022", "December 12, 2023", and "15:31 on December 1, 2023". Implementations are not specifically limited in this specification.

It should be understood that the field arrangement order shown in FIG. 3 is merely an example for description. In some possible implementations, the time (42) field can be located before the label (10) field, or the label (10) field can be located before the hasValue (1) field. Implementations are not specifically limited in this specification.

In some illustrated implementations, in addition to the above-mentioned plurality of fields having a total length of 96 bits, the encoded node or edge can further include a field for describing an identifier of the node or edge (such as the account number of a customer, or the name or student number of a student). The length of this field can be 32 bits, and the field content of this field can be a string obtained by converting, for example, the account number of the customer, or the name or student number of the student into binary using a dictionary conversion method.

For example, as shown in FIG. 3, the filtering conditions related to the plurality of pieces of attribute information and included in the query statement can correspond to the above fields respectively, so as to filter the graph data based on the fields. As shown in FIG. 3, the query statement can represent a query for an outgoing edge with a label of x1 and time information from t1 to t2, an incoming edge with a label of x2 and time information from t3 to t4, and 100 edges with time information from t5 to t6.

In some illustrated implementations, the node and the edge can be stored in a corresponding storage device (for example, a disk) in a form of a data block. Each data block can include a plurality of nodes and/or edges having a plurality of pieces of same attribute information. Correspondingly, label information corresponding to each data block can be maintained in the storage engine, and the label information is used for describing the plurality of pieces of same attribute information of the plurality of nodes and/or edges included in the data block. In some illustrated implementations, the label information corresponding to each data block can be used as an index for a graph data query, and can specifically be stored in the memory of the storage engine.

For example, the label information of data block 1 can be (inE, label-1, t1-t2) indicating that data block 1 includes incoming edges whose label is label-1 and whose recorded time is within the range of t1-t2. For example, the label information of data block 2 can be (outE, label-2, t3-t5) indicating that data block 2 includes outgoing edges whose label is label-2 and whose recorded time information is within the range of t3-t5. Implementations are not specifically limited in this specification.

In some illustrated implementations, the query condition can specifically include a filtering condition related to a plurality of pieces of attribute information of a node and/or an edge, such as "outgoing edge, and the label is label-1". Correspondingly, the storage engine executing the query can specifically include: determining, from all data blocks based on the maintained label information corresponding to each data block, a target data block that satisfies the filtering condition related to the plurality of pieces of attribute information, and reading the target data block from the storage device (such as a disk) that stores the graph data. Then, the storage engine can parse the target data block to obtain the target nodes and/or target edges (that is, target graph data) included in the target data block that satisfy the filtering condition.

As such, in this application, the label information corresponding to each data block is created in advance, and the label information is used as an index, so that the storage engine can quickly filter the graph data based on the label information of each data block when executing a graph data query, thereby improving the query efficiency of the storage engine.

In some illustrated implementations, each data block further includes statistical information related to the plurality of pieces of attribute information of the plurality of nodes and/or edges included in the data block. For example, using a transaction record as an example, the statistical information can include a total quantity of a plurality of edges included in the data block, a total amount or a total sales volume involved in a plurality of transaction records corresponding to the plurality of edges, etc. Implementations are not specifically limited in this specification. Correspondingly, the query condition can further include a statistical condition related to a plurality of pieces of attribute information of a node and/or an edge. For example, the statistical condition can be, for example, collecting statistics on the total transaction amount of all transaction records that satisfy the query condition. Implementations are not specifically limited in this specification. Correspondingly, in some illustrated implementations, by parsing the above-mentioned target data block, in addition to obtaining the target nodes and/or the target edges included in the target data block that satisfy the filtering condition, the storage engine can also obtain statistical information included in the target data block and related to a plurality of pieces of attribute information of the target nodes and/or the target edges. Then, the storage engine can obtain, through calculation based on the statistical information, a statistical result satisfying the statistical condition. For example, statistical information included in a plurality of target data blocks that satisfy the condition can be added up to obtain corresponding statistical results.

In some illustrated implementations, each data block can be stored in a disk in a predetermined storage order to further improve query efficiency. In some illustrated implementations, the predetermined storage order can be related to the plurality of pieces of attribute information included in the label information of the data block.

For example, the storage order can include a combination of one or more of the following orders: a first order: a node being ranked before an edge; a second order: an incoming edge being ranked before an outgoing edge, or an outgoing edge being ranked before an incoming edge; a third order: an order corresponding to labels; or a fourth order: an order corresponding to time information.

In some illustrated implementations, a sorting priority of the first order can be higher than a sorting priority of the second order, the sorting priority of the second order can be higher than a sorting priority of the third order, and the sorting priority of the third order can be higher than a sorting priority the fourth order. Implementations are not specifically limited in this specification.

In some illustrated implementations, in this application, only some nodes or edges can be sequentially stored in the graph data. In some illustrated implementations, in this application, a target node can be determined from a plurality of nodes, and the target node can be a node, in the plurality of nodes, for which a quantity of edges connected to the node is greater than a predetermined threshold. For example, the predetermined threshold is, for example, one thousand, ten thousand, or one hundred million. Implementations are not specifically limited in this specification. Using graph data including a transaction record between a customer and a merchant as an example, the target node can be a hot merchant having a large quantity of transaction records. For example, the hot merchant may have generated hundreds of millions of transactions with a large number of customers during 2023.

Then, in this application, the target node and a plurality of edges connected to the target node can be sequentially stored to the disk in the form of a data block based on the predetermined storage order.

For example, references can be made to FIG. 4. FIG. 4 is a schematic diagram illustrating a storage method for graph data, according to some example embodiments. As shown in FIG. 4, the target node is stored in the frontmost position, and then all incoming edges can be stored in front of all outgoing edges. In all incoming edges, the incoming edge whose label is label-1 is stored in front of the incoming edge whose label is label-2, and similarly, in all outgoing edges, the outgoing edge whose label is label-1 is stored in front of the outgoing edge whose label is label-2. In all incoming edges whose label is label-1 or label-2, incoming edges are sequentially stored based on a time sequence corresponding to time information included in the incoming edges, for example, the incoming edge with time information t1 is stored in front of the incoming edge with time information t2, the incoming edge with time information t2 is stored in front of the incoming edge with time information t3, and the incoming edge with time information t3 is stored in front of the incoming edge with time information t4. Similarly, in all outgoing edges whose label is label-1 or label-2, outgoing edges can also be sequentially stored based on the time sequence corresponding to the time information included in the outgoing edges. References can be made to FIG. 4 for details, and details are omitted here.

For example, using the data block storage method shown in FIG. 4 and the query condition of "incoming edges with label-2 within time t1-t2" as an example, the storage engine querying the graph data can specifically include: first filtering the incoming edges from all stored graph data, further filtering the incoming edges with label-2 from all incoming edges, then filtering the incoming edges with time information within the range of t1-t2 from all the incoming edges with label-2, and finally performing filtering to obtain data block 4 that satisfies the query condition, and then reading data block 4 from the disk, and further parsing data block 4, so as to obtain a plurality of incoming edges with the time information within the time range of t1-t2 and the label being label-2 that are included in data block 4.

As shown in FIG. 4, each data block stored sequentially can include a plurality of incoming edges/outgoing edges having the same label and time information within the same time range, and statistical information #e for the plurality of incoming edges/outgoing edges. In some illustrated implementations, the first data block 1 can further include a target node.

Further, after obtaining, through query based on the pushed-down query condition, the target graph data that satisfies the query needs from the stored graph data, the storage engine can return, to the query engine, the target graph data obtained through the query. Furthermore, the query engine can return the received target graph data to the user as a query result of the query request initiated by the user.

In some illustrated implementations, after receiving the target graph data returned by the storage engine, the query engine can further process the target graph data, and then return the processed target graph data to the user as a final query result. Implementations are not specifically limited in this specification. For example, after receiving the target graph data returned by the storage engine, the query engine can further perform statistical analysis and sorting on the target graph data. Implementations are not specifically limited in this specification.

In conclusion, in this application, the query condition is pushed down to the storage engine, and the storage engine replaces the query engine to execute the query. Therefore, the graph data that satisfies the query condition can be directly read from the stored graph data, and returned to a user as a query result, thereby effectively reducing reading of a large amount of irrelevant data and a plurality of transmissions of a large amount of data between the storage engine and the query engine, greatly reducing an amount of data read and transmitted in each graph data query, and further improving query efficiency and ensuring user experience.

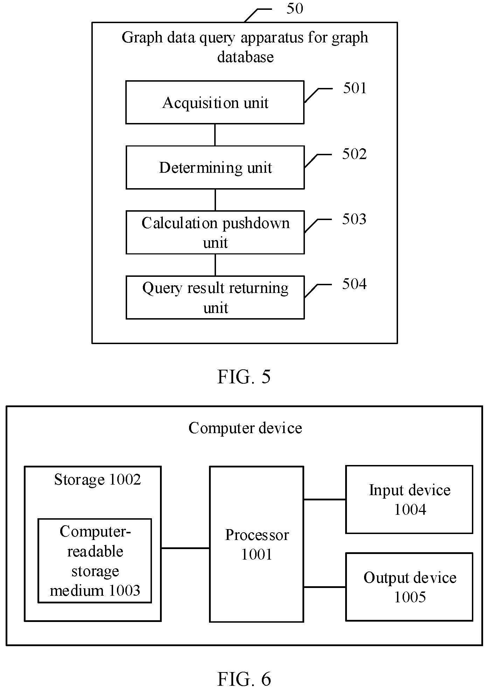

Corresponding to the method process implementation, some embodiments of this specification further provide a graph data query apparatus for a graph database. FIG. 5 is a schematic diagram illustrating a structure of a graph data query apparatus for a graph database, according to some example embodiments. The apparatus 50 can be applied to a graph database, and the graph database can include a query engine and a storage engine. As shown in FIG. 5, the apparatus 50 includes: an acquisition unit 501, configured to parse, in response to a query request for the graph database, a query statement included in the query request, to obtain at least one query condition included in the query statement; a determining unit 502, configured to determine whether the at least one query condition includes a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and a calculation pushdown unit 503, configured to, if the at least one query condition includes the query condition, push down, to the storage engine, the query condition that needs to be executed by the operator, so that the storage engine executes the query request.

In some illustrated implementations, the apparatus 50 further includes a query result returning unit 504, configured to return, to a user as a query result of the query request, target graph data obtained by the storage engine through the query.

In some illustrated implementations, the calculation pushdown unit 503 is specifically configured to: expose, to the storage engine through an interface, the query condition that needs to be executed by the operator.

In some illustrated implementations, the calculation pushdown unit 503 is specifically configured to: after the query condition that needs to be executed by the operator is encoded, expose the encoded query condition to the storage engine through an interface, so that the storage engine parses the encoded query condition and executes the query based on a result of the parsing.

In some illustrated implementations, the calculation pushdown unit 503 is specifically configured to: serialize the query condition that needs to be executed by the operator and then transmit the serialized query condition to the storage engine.

In some illustrated implementations, the calculation pushdown unit 503 is specifically configured to: after the query condition that needs to be executed by the operator is serialized, transmit the serialized query condition to the storage engine through a predetermined communication protocol, so that the storage engine deserializes the serialized query condition and executes the query based on a result of the deserialization.

In some illustrated implementations, each node and edge in graph data includes a plurality of pieces of attribute information, encoding information corresponding to each node and edge is maintained in the storage engine, the encoding information includes a plurality of fields arranged in a predetermined encoding order, and the plurality of fields are used to sequentially describe the plurality of pieces of attribute information of the node or edge; and the query condition includes a filtering condition related to a plurality of pieces of attribute information of a node and/or an edge; and the calculation pushdown unit 503 is specifically configured to: determine, by the storage engine based on the maintained encoding information corresponding to each node and edge, a target node and/or a target edge that satisfies the filtering condition related to the plurality of pieces of attribute information, and read the target node and/or the target edge from a storage device that stores the graph data.

In some illustrated implementations, each node and edge in graph data includes a plurality of pieces of attribute information, and the node and the edge are stored in a corresponding storage device in a form of a data block, where each data block includes a plurality of nodes and/or edges having a plurality of pieces of same attribute information, label information corresponding to each data block is maintained in the storage engine, and the label information is used for describing the plurality of pieces of same attribute information of the plurality of nodes and/or edges included in the data block.

The query condition includes a filtering condition related to a plurality of pieces of attribute information of a node and/or an edge; and the calculation pushdown unit 503 is specifically configured to: determine, by the storage engine based on the maintained label information corresponding to each data block, a target data block that satisfies the filtering condition related to the plurality of pieces of attribute information, and read the target data block from the storage device; and parse the target data block to obtain target nodes and/or target edges included in the target data block that satisfy the filtering condition.

In some illustrated implementations, the plurality of pieces of attribute information include at least a combination of any one or more of the following attribute information: information indicating a node, information indicating an incoming edge, a timestamp, a label, or time information.

In some illustrated implementations, each data block further includes statistical information related to the plurality of pieces of attribute information of the plurality of nodes and/or edges included in the data block; the query condition further includes a statistical condition related to a plurality of pieces of attribute information of a node and/or an edge; and the calculation pushdown unit 503 is specifically configured to: parse the target data block to obtain the target nodes and/or the target edges included in the target data block that satisfy the filtering condition, and statistical information included in the target data block and related to a plurality of pieces of attribute information of the target nodes and/or the target edges; and obtain, through calculation based on the statistical information, a statistical result satisfying the statistical condition.

In some illustrated implementations, each data block is stored in the storage device in a predetermined storage order, and the predetermined storage order is related to the plurality of pieces of attribute information.

In some illustrated implementations, the storage order includes a combination of one or more of the following orders: a first order: a node being ranked before an edge; a second order: an incoming edge being ranked before an outgoing edge, or an outgoing edge being ranked before an incoming edge; a third order: an order corresponding to labels; or a fourth order: an order corresponding to time information.

In some illustrated implementations, a sorting priority of the first order is higher than a sorting priority of the second order, the sorting priority of the second order is higher than a sorting priority of the third order, and the sorting priority of the third order is higher than a sorting priority the fourth order.

For an implementation process of functions and roles of each unit in the apparatus 50, references can be made to descriptions of the embodiments corresponding to FIG. 1 to FIG. 4 for details. Details are omitted here for simplicity. It should be understood that the apparatus 50 can be implemented by using software, or can be implemented by using hardware or a combination of software and hardware. Software implementation is used as an example. As a logical apparatus, the apparatus is formed by reading corresponding computer program instructions to a memory by a processor (CPU) of a device in which the apparatus is located. In terms of hardware, in addition to a CPU and a storage, the device in which the apparatus is located usually further includes other hardware such as a chip for sending and receiving radio signals, and/or other hardware such as a card for implementing a network communication function.

The described apparatus embodiment is merely an example. The units described as separate parts can or do not have to be physically separate, and parts displayed as units can or do not have to be physical modules, can be located in one position, or can be distributed on a plurality of network modules. Some or all of the units or modules can be selected depending on an actual need to achieve the objectives of the solutions of this specification. A person of ordinary skill in the art can understand and implement the embodiments without creative efforts.

The apparatuses, units, or modules described in the above-mentioned embodiments can be implemented by a computer chip or an entity, or can be implemented by a product with a certain function. A typical implementation device is a computer, and a specific form of the computer can be a personal computer, a laptop computer, a cellular phone, a camera phone, a smartphone, a personal digital assistant, a media player, a navigation device, an email sending and receiving device, a game console, a tablet computer, a wearable device, or any combination of several of these devices.

Corresponding to the previously described method embodiments, some embodiments of this specification further provide a computer device. FIG. 6 is a schematic diagram illustrating a structure of a computer device, according to some example embodiments. The computer device can be the computer device 100 in the system architecture shown in FIG. 1, and can be equipped with a corresponding graph database. The graph database can include a query engine and a storage engine. As shown in FIG. 6, the computer device includes a processor 1001 and a storage 1002, and can further include an input device 1004 (for example, a keyboard) and an output device 1005 (for example, a display). The processor 1001, the storage 1002, the input device 1004, and the output device 1005 can be connected to each other by using a bus or other methods. As shown in FIG. 6, the storage 1002 includes a computer-readable storage medium 1003, and the computer-readable storage medium 1003 stores a computer program executable by the processor 1001. The processor 1001 can be a CPU, a microprocessor, or an integrated circuit for controlling the execution of the above-mentioned method embodiments. When the processor 1001 runs the stored computer program, the steps of the graph data query method for a graph database in some embodiments of this specification can be performed. The steps include: parsing, in response to a query request for the graph database, a query statement included in the query request, to obtain at least one query condition included in the query statement; determining whether the at least one query condition includes a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; if the at least one query condition includes the query condition, pushing down, to the storage engine, the query condition that needs to be executed by the operator, so that the storage engine executes the query request; and so on.

For detailed descriptions of the steps of the graph data query method for a graph database, references can be made to the previous content, and details are omitted here.

Corresponding to the previously described method embodiment, embodiments of this specification further provide a computer-readable storage medium, and the storage medium stores a computer program. When the computer program is executed by a processor, the steps of the graph data query method for a graph database in some embodiments of this specification are performed. For details, references can be made to the descriptions of the embodiments corresponding to FIG. 1 to FIG. 4. Details are omitted here for simplicity.

The above-mentioned descriptions are merely some example embodiments of this specification, but are not intended to limit this specification. Any modification, equivalent replacement, or improvement made without departing from the spirit and principle of this specification shall fall within the protection scope of this specification.

In a typical configuration, the computer device includes one or more CPUs, input/output interfaces, network interfaces, and memories.

The memory can include a form such as a non-persistent memory, a random access memory (RAM), or a nonvolatile memory in a computer-readable medium, for example, a read-only memory (ROM) or a flash memory (flash RAM). The memory is an example of the computer-readable medium.

The computer-readable medium includes persistent, non-persistent, movable, and unmovable media that can store information by using any method or technology. The information can be a computer readable instruction, a data structure, a program module, or other data.

Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD) or another optical storage, a cassette, a cassette magnetic disk storage, or another magnetic storage device or any other non-transmission medium. The computer storage medium can be configured to store information that can be accessed by a computing device. As specified in this specification, the computer-readable medium does not include transitory computer-readable media (transitory media), such as a modulated data signal and a carrier.

It is worthwhile to further note that the term "include", "contain", or any other variant thereof is intended to cover a non-exclusive inclusion, so a process, a method, a product, or a device that includes a list of elements not only includes those elements but also includes other elements that are not expressly listed, or further includes elements inherent to such a process, method, product, or device. In a case without more restrictions, for an element limited by the statement "include a...", a process, method, product, or device that includes the element can further include another same element.

A person skilled in the art should understand that some embodiments of this specification can be provided as methods, systems, or computer program products. Therefore, the embodiments of this specification can use a form of hardware only embodiments, software only embodiments, or embodiments with a combination of software and hardware. In addition, embodiments of this specification can be in a form of a computer program product implemented on one or more computer-usable storage media (including but not limited to a magnetic disk storage, a CD-ROM, an optical storage, etc.) including computer-usable program code.

### EXAMPLES

1. A graph data query method for a graph database, wherein the graph database comprises a query engine and a storage engine, and the method comprises:
   parsing, in response to a query request for the graph database, a query statement comprised in the query request, to obtain at least one query condition comprised in the query statement;
   determining whether the at least one query condition comprises a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and
   if the at least one query condition comprises the query condition, pushing down, to the storage engine, the query condition that needs to be executed by the operator, so that the storage engine executes the query request.
2. The method according to example 1, wherein the method further comprises:
   returning, to a user as a query result of the query request, target graph data obtained by the storage engine through the query.
3. The method according to example 1, wherein the pushing down, to the storage engine, the query condition that needs to be executed by the operator comprises:
   exposing, to the storage engine through an interface, the query condition that needs to be executed by the operator.
4. The method according to example 3, wherein after the query condition that needs to be executed by the operator is encoded, the encoded query condition is exposed to the storage engine through an interface, so that the storage engine parses the encoded query condition and executes the query based on a result of the parsing.
5. The method according to example 1, wherein the pushing down, to the storage engine, the query condition that needs to be executed by the operator comprises:
   serializing the query condition that needs to be executed by the operator and then transmitting the serialized query condition to the storage engine.
6. The method according to example 5, wherein after the query condition that needs to be executed by the operator is serialized, the serialized query condition is transmitted to the storage engine through a predetermined communication protocol, so that the storage engine deserializes the serialized query condition and executes the query based on a result of the deserialization.
7. The method according to example 1, wherein each node and edge in graph data comprises a plurality of pieces of attribute information, encoding information corresponding to each node and edge is maintained in the storage engine, the encoding information comprises a plurality of fields arranged in a predetermined encoding order, and the plurality of fields are used to sequentially describe the plurality of pieces of attribute information of the node or edge; and
   the query condition comprises a filtering condition related to a plurality of pieces of attribute information of a node and/or an edge; and the storage engine executes the query, comprising:
   determining, by the storage engine based on the maintained encoding information corresponding to each node and edge, a target node and/or a target edge that satisfies the filtering condition related to the plurality of pieces of attribute information, and reading the target node and/or the target edge from a storage device that stores the graph data.
8. The method according to example 1, wherein each node and edge in graph data comprises a plurality of pieces of attribute information, and the node and the edge are stored in a corresponding storage device in a form of a data block, wherein each data block includes a plurality of nodes and/or edges having a plurality of pieces of same attribute information, label information corresponding to each data block is maintained in the storage engine, and the label information is used for describing the plurality of pieces of same attribute information of the plurality of nodes and/or edges comprised in the data block; and
   the query condition comprises a filtering condition related to a plurality of pieces of attribute information of a node and/or an edge; and the storage engine executes the query, comprising:
   determining, by the storage engine based on the maintained label information corresponding to each data block, a target data block that satisfies the filtering condition related to the plurality of pieces of attribute information, and reading the target data block from the storage device; and
   parsing the target data block to obtain target nodes and/or target edges comprised in the target data block that satisfy the filtering condition.
9. The method according to example 7 or 8, wherein the plurality of pieces of attribute information comprise at least a combination of any one or more of the following attribute information: information indicating a node, information indicating an incoming edge, a timestamp, a label, or time information.
10. The method according to example 8, wherein each data block further comprises statistical information related to the plurality of pieces of attribute information of the plurality of nodes and/or edges comprised in the data block; the query condition further comprises a statistical condition related to a plurality of pieces of attribute information of a node and/or an edge; and the parsing the target data block to obtain target nodes and/or target edges comprised in the target data block that satisfy the filtering condition comprises:
   parsing the target data block to obtain the target nodes and/or the target edges comprised in the target data block that satisfy the filtering condition, and statistical information comprised in the target data block and related to a plurality of pieces of attribute information of the target nodes and/or the target edges; and
   obtaining, through calculation based on the statistical information, a statistical result satisfying the statistical condition.
11. The method according to example 8, wherein each data block is stored in the storage device in a predetermined storage order, and the predetermined storage order is related to the plurality of pieces of attribute information.
12. The method according to example 11, wherein the storage order comprises a combination of one or more of the following orders:
   a first order: a node being ranked before an edge;
   a second order: an incoming edge being ranked before an outgoing edge, or an outgoing edge being ranked before an incoming edge;
   a third order: an order corresponding to labels; or
   a fourth order: an order corresponding to time information.
13. The method according to example 12, wherein a sorting priority of the first order is higher than a sorting priority of the second order, the sorting priority of the second order is higher than a sorting priority of the third order, and the sorting priority of the third order is higher than a sorting priority the fourth order.
14. A graph data query apparatus for a graph database, wherein the graph database comprises a query engine and a storage engine, and the apparatus comprises:
   an acquisition unit, configured to parse, in response to a query request for the graph database, a query statement comprised in the query request, to obtain at least one query condition comprised in the query statement;
   a determining unit, configured to determine whether the at least one query condition comprises a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and
   a calculation pushdown unit, configured to, if the at least one query condition comprises the query condition, push down, to the storage engine, the query condition that needs to be executed by the operator, so that the storage engine executes the query request.
15. A graph database, wherein the graph database comprises a query engine and a storage engine, wherein
   the query engine is configured to:
   parse, in response to a query request for the graph database, a query statement comprised in the query request, to obtain at least one query condition comprised in the query statement;
   determine whether the at least one query condition comprises a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and
   if the at least one query condition comprises the query condition, push down, to the storage engine, the query condition that needs to be executed by the operator; and
   the storage engine is configured to execute a query based on the query condition.
16. A computer device, comprising a storage and a processor, wherein the storage stores a computer program executable by the processor; and when running the computer program, the processor implements the method according to any one of examples 1 to 13.
17. A computer-readable storage medium, wherein the computer-readable storage medium stores a computer program, and the computer program is executed by a processor to implement the method according to any one of examples 1 to 13.

## Claims

1. A graph data query method for a graph database, wherein the graph database comprises a query engine and a storage engine, and the method comprises:
parsing, in response to a query request for the graph database, a query statement comprised in the query request, to obtain at least one query condition comprised in the query statement;
determining whether the at least one query condition comprises a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and
if the at least one query condition comprises the query condition, pushing down, to the storage engine, the query condition that needs to be executed by the operator, so that the storage engine executes the query request.

2. The method according to claim 1, wherein the method further comprises:
returning, to a user as a query result of the query request, target graph data obtained by the storage engine through the query.

3. The method according to any one of claims 1 or 2, wherein the pushing down, to the storage engine, the query condition that needs to be executed by the operator comprises:
exposing, to the storage engine through an interface, the query condition that needs to be executed by the operator; optionally
wherein, after the query condition that needs to be executed by the operator is encoded, the encoded query condition is exposed to the storage engine through an interface, so that the storage engine parses the encoded query condition and executes the query based on a result of the parsing.

4. The method according to claim 1, wherein the pushing down, to the storage engine, the query condition that needs to be executed by the operator comprises:
serializing the query condition that needs to be executed by the operator and then transmitting the serialized query condition to the storage engine; optionally
wherein after the query condition that needs to be executed by the operator is serialized, the serialized query condition is transmitted to the storage engine through a predetermined communication protocol, so that the storage engine deserializes the serialized query condition and executes the query based on a result of the deserialization.

5. The method according to any one of claims 1 to 4, wherein each node and edge in graph data comprises a plurality of pieces of attribute information, encoding information corresponding to each node and edge is maintained in the storage engine, the encoding information comprises a plurality of fields arranged in a predetermined encoding order, and the plurality of fields are used to sequentially describe the plurality of pieces of attribute information of the node or edge; and
the query condition comprises a filtering condition related to a plurality of pieces of attribute information of a node and/or an edge; and the storage engine executes the query, comprising:
determining, by the storage engine based on the maintained encoding information corresponding to each node and edge, a target node and/or a target edge that satisfies the filtering condition related to the plurality of pieces of attribute information, and reading the target node and/or the target edge from a storage device that stores the graph data.

6. The method according to any one of claims 1 to 5, wherein each node and edge in graph data comprises a plurality of pieces of attribute information, and the node and the edge are stored in a corresponding storage device in a form of a data block, wherein each data block includes a plurality of nodes and/or edges having a plurality of pieces of same attribute information, label information corresponding to each data block is maintained in the storage engine, and the label information is used for describing the plurality of pieces of same attribute information of the plurality of nodes and/or edges comprised in the data block; and
the query condition comprises a filtering condition related to a plurality of pieces of attribute information of a node and/or an edge; and the storage engine executes the query, comprising:
determining, by the storage engine based on the maintained label information corresponding to each data block, a target data block that satisfies the filtering condition related to the plurality of pieces of attribute information, and reading the target data block from the storage device; and
parsing the target data block to obtain target nodes and/or target edges comprised in the target data block that satisfy the filtering condition.

7. The method according to claim 5 or 6, wherein the plurality of pieces of attribute information comprise at least a combination of any one or more of the following attribute information: information indicating a node, information indicating an incoming edge, a timestamp, a label, or time information.

8. The method according to claim 7, wherein each data block further comprises statistical information related to the plurality of pieces of attribute information of the plurality of nodes and/or edges comprised in the data block; the query condition further comprises a statistical condition related to a plurality of pieces of attribute information of a node and/or an edge; and the parsing the target data block to obtain target nodes and/or target edges comprised in the target data block that satisfy the filtering condition comprises:
parsing the target data block to obtain the target nodes and/or the target edges comprised in the target data block that satisfy the filtering condition, and statistical information comprised in the target data block and related to a plurality of pieces of attribute information of the target nodes and/or the target edges; and
obtaining, through calculation based on the statistical information, a statistical result satisfying the statistical condition.

9. The method according to any one of claims 7 or 8, wherein each data block is stored in the storage device in a predetermined storage order, and the predetermined storage order is related to the plurality of pieces of attribute information.

10. The method according to claim 9, wherein the storage order comprises a combination of one or more of the following orders:
a first order: a node being ranked before an edge;
a second order: an incoming edge being ranked before an outgoing edge, or an outgoing edge being ranked before an incoming edge;
a third order: an order corresponding to labels; or
a fourth order: an order corresponding to time information.

11. The method according to claim 10, wherein a sorting priority of the first order is higher than a sorting priority of the second order, the sorting priority of the second order is higher than a sorting priority of the third order, and the sorting priority of the third order is higher than a sorting priority the fourth order.

12. A graph data query apparatus for a graph database, wherein the graph database comprises a query engine and a storage engine, and the apparatus comprises:
an acquisition unit, configured to parse, in response to a query request for the graph database, a query statement comprised in the query request, to obtain at least one query condition comprised in the query statement;
a determining unit, configured to determine whether the at least one query condition comprises a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and
a calculation pushdown unit, configured to, if the at least one query condition comprises the query condition, push down, to the storage engine, the query condition that needs to be executed by the operator, so that the storage engine executes the query request.

13. A graph database, wherein the graph database comprises a query engine and a storage engine, wherein
the query engine is configured to:
parse, in response to a query request for the graph database, a query statement comprised in the query request, to obtain at least one query condition comprised in the query statement;
determine whether the at least one query condition comprises a query condition that needs to be executed by one or more of the following operators: an operator for querying information about a node or an edge in graph data, an operator for performing a filtering query on graph data, an operator for limiting a quantity of query results, an operator for sorting query results, or an operator for performing statistical analysis on query results; and
if the at least one query condition comprises the query condition, push down, to the storage engine, the query condition that needs to be executed by the operator; and
the storage engine is configured to execute a query based on the query condition.

14. A computer device, comprising a storage and a processor, wherein the storage stores a computer program executable by the processor; and when running the computer program, the processor implements the method according to any one of claims 1 to 11.

15. A computer-readable storage medium, wherein the computer-readable storage medium stores a computer program, and the computer program is executed by a processor to implement the method according to any one of claims 1 to 11.
